# EUROPÄISCHE PATENTANMELDUNG

(11) **EP 1 098 480 A1**
(43) Veröffentlichungstag der Anmeldung: **09.05.2001**
(21) Anmeldenummer: 99121864.5
(22) Anmeldetag: 04.11.1999
(51) Int. Cl.: H04L 12/56, H04Q 3/66

(54) **Verfahren zur Lebenszeitbegrenzung von Datagrammen in Paketvermittelten Netzen**

(71) Anmelder: SIEMENS AKTIENGESELLSCHAFT, 80333 München (DE)
(72) Erfinder: Gradischnig, Klaus David, 82131 Gauting (DE)

(57) **Zusammenfassung**

Die Erfindung betrifft ein Verfahren zur Lebenszeitbegrenzung von Datagrammen in paketvermittelten Netzen. Gemäß der Erfindung wird vorgesehen, daß ein Hop-Count-Feld (HC) nicht bei jedem Durchlaufen eines Transferknotens um 1 verändert wird, sondern daß die Veränderung des Hop-Count-Feldes (HC) in Abhängigkeit von dem Eintreffen weiterer Bedingungen, beispielsweise dem von den Transferknoten für das Datenpaket ausgewählten Übertragungsweg oder von der Position des Transferknotens im Netz, geschieht. Je nach Eintritt einer solchen Bedingung kann das Hop-Count-Feld (HC) auch um mehr als 1 Bit verändert werden.

## Beschreibung

In Datenkommunikationsnetzen, beispielsweise dem Internet, in denen der Weg von Nachrichten durch das Netz nicht durch eine einzige Instanz, beispielsweise die Nachrichtenquelle, vorgegeben wird, sondern die Nachrichtenlenkung autonom in den einzelnen Netzknoten anhand der im Header des Datenpakets angegebenen Zieladresse durchgeführt wird, kann es aufgrund von inkonsistenten Routing-Tabellen, die in den einzelnen Routern vorliegen, vorkommen, daß Nachrichten einen zu langen Weg einschlagen oder sogar Endlos-Schleifen durchlaufen.

Im Internet-Protokoll TCP/IP gibt es die Option des Rout-Recording, bei dem das Empfangsprimitive der Nachricht immer eine Liste der Router enthält, die auf dem Weg zwischen Sender und Empfänger lagen. Damit ist es im Prinzip möglich, die Zahl der durchlaufenen Router festzustellen. Ebenfalls können durch das Aufzeichnen der durchlaufenden Router in den Nachrichten Endlos-Schleifen festgestellt werden. Durch diese Option werden aber sehr viele Felder reserviert, so daß diese Methode auch im Internet nicht immer angewendet werden kann, und insbesondere in anderen Datennetzen mit anderen Netzübertragungsprotokollen nicht verwendet werden kann.

Die Möglichkeit, das Umherirren von Datenpaketen auf zu langen Wegen oder in Endlos-Schleifen kann nach der Methode des Hop-Count-Wertes gelöst werden. Der Hop-Count ist eine Maß-einheit für die Entfernung von zwei Datenstationen im Netz. Ein Hop-Cout von n bedeutet, daß zwischen Quelldatenstation und Zieldatenstation n Transferknoten oder Gateways liegen. Der Hop-Count-Wert dient im Internet-Protokoll dazu, Datagramme mit fehlerhaften Empfängeradressen nicht endlos im Netz umherirren zu lassen, was zusätzliches Datenaufkommen schafft. So ist beispielsweise im IPv6-Protokoll ein Hop-Limit-Feld von 8 Bit Länge vorgesehen.

Eine weitere, bekannte Methode zur Überwachung des Netzes auf das Auftreten von Schleifen liegt darin, die einzelnen Wege auf Überlast zu überwachen. Tritt Überlast auf, besteht die Möglichkeit einer Schleife, und es werden dann spezifische Tests durchgeführt, beispielsweise durch Versenden von Testnachrichten, welche auf dem Weg mit der vermuteten Schleife ausgesendet und auf Ihre Rückkehr überwacht werden. Hiermit ist zwar das Entdecken von Schleifen möglich, es ist aber nicht möglich, unökonomische, zu lange Wege im Netz zu erkennen.

Bei Netzwerken mit administrativ vorgegebenen und nach Priorität geordneten Wegen (Primär- und Sekundärwegen) wird mit Hilfe eines zusätzlichen Protokolls ein Auditprozeß über das Netz verteilt durchgeführt, der alle im Netz möglichen Wege auf Maximallänge und Schleifenfreiheit überprüft. Dieser Auditprozeß muß aber in allen Netzknoten zur Verfügung stehen. Die Prozesse hierfür sind auch sehr aufwendig.

Bei einer weiteren Methode geht man von der Annahme aus, daß ein Weg, der nur oder größtenteils aus hoch prioren Abschnitten besteht, eher schleifenfrei ist als ein Weg, der mehrere oder auch viele niedrig priore Abschnitte enthält. Datenverkehr, der seinen Ursprung nicht im eigenen Knoten des Netzes hat, darf niedriger priore Wege nur eingeschränkt benutzen. Ein Nachteil dieser Methode liegt darin, daß nur eine sehr begrenzte Geschichte des Nachrichtenverlaufs zur Verfügung steht und damit oft unnötig Einschränkungen gemacht werden müssen.

Der Erfindung liegt die Aufgabe zugrunde, bei paketvermittelten Datennetzen mit Protokollen, die keinen ausreichenden Raum ein Hop-Limit-Feld besitzen, Maßnahmen anzugeben, mit denen zu lange Wege oder Schleifen für die Datagramme im Netz erkannt werden können.

Diese Aufgabe wird mit dem im Patentanspruch 1 angegebenen Verfahren gelöst. Vorteilhafte Ausgestaltungen der Erfindung sind in den Unteransprüchen angegeben.

Gemäß der Erfindung wird ebenfalls ein Hop-Count Datenfeld (im Folgenden auch als HC-Feld bezeichnet) für die Lebenszeitbegrenzung des Datagramms vorgesehen, wobei dieses Feld jedoch nicht die üblicherweise vorgesehene Länge von 8 Bit besitzen muß, sondern wesentlich kürzer, beispielsweise nur 2 Bit lang sein kann. Bei der oben beschriebenen Hop-Count-Methode würde ein Hop-Limit-Feld von nur 2 Bit Länge dazu führen, daß ein Datagramm, wenn es drei Netzknoten durchlaufen hat und beim vierten erscheint, dort verworfen würde, da dann die 2 Bit nach unten bzw. nach oben gezählt worden wären. Gemäß der Erfindung wird dieser Nachteil umgangen, indem das HC-Feld nicht bei jedem Durchlaufen eines Transferknotens (Router, Gateway) verändert wird, sondern nur bei Vorliegen weiterer Bedingungen. Als eine solche Bedingung wird vorteilhafterweise die Priorität des von dem Router ausgesuchten Weges verwendet. Wählt der Router eine hoch priore Route, so wird er das HC-Feld nicht, bei niedrig prioren Routen jedoch um 1 und bei sehr niedrig prioren Routen um 2 verändern. Es wird wie bei der oben bereits geschilderten Methode davon ausgegangen, daß hoch priore Routen eher schleifenfrei sind als solche, die niedrigere Priorität besitzen.

Die Bedingung für die Veränderung des HC-Feldes kann alternativ auch in Abhängigkeit von der Struktur des Netzwerkes gewählt werden. So ist es möglich, daß das HC-Feld nur von besonders wichtigen, zentralen Knoten verändert werden kann. Als weitere Bedingung dient hier also die Position des jeweiligen Routers im Netz. Dies ist insbesondere dann von Interesse, wenn man nur wenige Router mit dieser Methode ausstatten möchte.

Das erfindungsgemäße Verfahren wird mit Vorteil bei Netzen angewendet, die mit dem Zeichengabesystem Nr. 7 (SS7) arbeiten.

Vorzugsweise wird in einem Transferknoten der Wert des HC-Feldes bei Vorliegen der Bedingungen vor dem Weiterleiten erhöht. Dies hat den Vorteil, daß bei einer Einfügung des erfindungsgemäßen Verfahrens in Netzen nicht sämtliche im Netz befindlichen Endknoten auf die neue Methode angepaßt werden müssen, sondern daß dies unterbleiben kann. Normalerweise werden in einem Netz nicht verwendete Felder in einer Nachricht auf Null gesetzt. Daher werden Endknoten, die nicht entsprechend angepaßt sind, das HC-Feld auf Null setzen. Würde diese Nachricht dann an einen Transferknoten gelangen, bei dem das erfindungsgemäße Verfahren mit Erhöhung des HC-Feldes implementiert ist, so entnimmt dieser aus dem Wert Null, daß die Nachricht einen zu langen Weg durchlaufen hat und verwirft sie. Dieses Problem tritt nicht auf, wenn der Wert des HC-Feldes in Abhängigkeit von dem Vorliegen der Bedingungen erhöht wird, und die Nachricht bei Überschreiten des Maximalwertes verworfen wird und Alarmierungsfunktionen eingeleitet werden.

Im Folgenden wird die Erfindung anhand eines Ausführungsbeispieles beschrieben und näher erläutert:
Fig. 1 zeigt das Nachrichtenformat der MTP-Ebene 3,
Fig. 2 zeigt schematisch ein Netz, in dem die Erfindung eingesetzt wird.

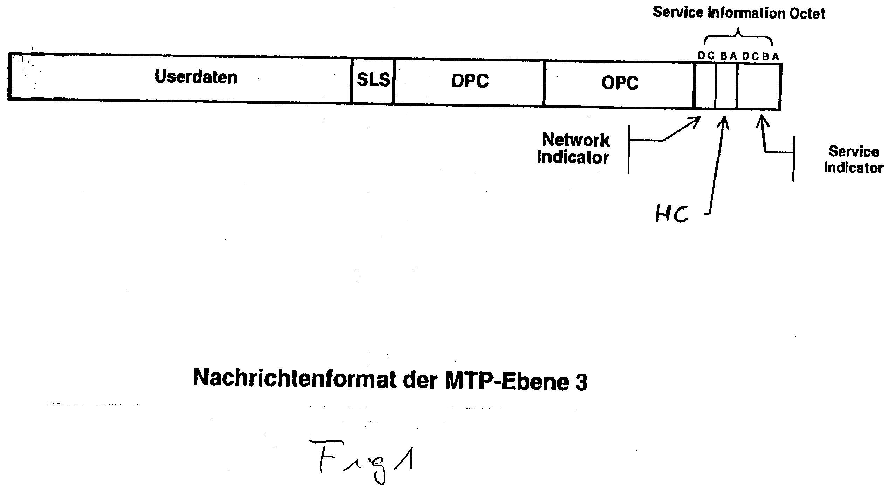

Fig. 1 zeigt das Nachrichtenformat der MTP-Schicht 3 nach dem ITU-Standard (International Telecommunication Union). Es umfaßt die Nutzdaten (Userdaten), das Signalling Link Selection (SLS)-Feld, die Zieladresse DPC (Destination Point Code), die Absenderadresse OPC (Origination Point Code), sowie ein Service Information Octet, welches einen Service Indicator von 4 Bit umfaßt, ein weiteres Feld von 2 Bit als Network Indicator und ein ansonsten ungenutztes Feld von 2 Bit. Dieses Feld wird von dem erfindungsgemäßen Verfahren als HC-Feld ausgenutzt.

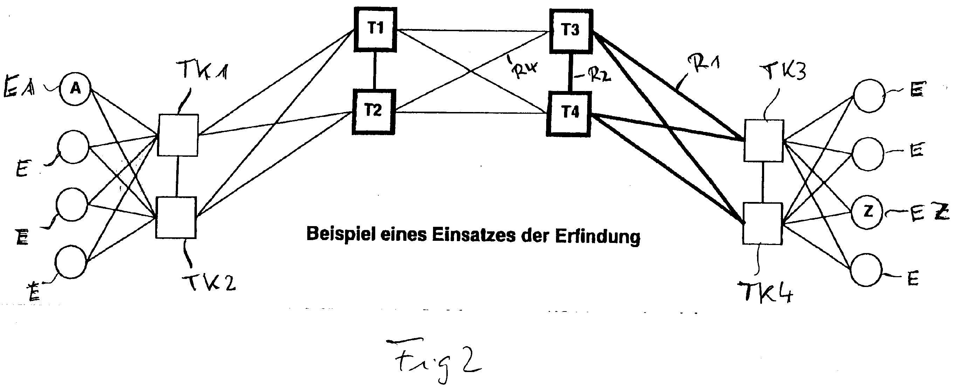

Die Fig. 2 zeigt schematisch ein Netz, bei dem die Erfindung eingesetzt wird. Das Netz besteht aus Endknoten E, Transferknoten TK1, TK2, TK3, TK4, bei denen das erfindungsgemäße Schleifenerkennungsverfahren nicht eingesetzt wird, sowie Transferknoten T1, T2, T3, T4, bei denen die Erfindung implementiert ist. Es wird dabei davon ausgegangen, daß die Transferknoten T1 bis T4 Datenverkehr nie über denselben Link bzw. Linkset senden, über den er empfangen wurde. Sendet ein Transferknoten, z. B. der Knoten T3, die Nachricht auf eine Route R1 mit der höchsten Priorität, so ändert er den Wert dieses Feldes nicht. Sendet er dagegen die Nachricht auf eine Route R2 mit niedriger Priorität, so erhöht er den Wert um 1, und wählt er eine der niedrigst prioren Routen R4 aus, so erhöht er den Wert um 2. Steht der Wert des HC-Feldes auf 2, so kann ein nachfolgender Transferknoten T4, bei dem das Verfahren implementiert ist, die Nachricht noch einmal über eine Route R2 mit niedrigerer Priorität senden. Soll sie im weiteren Verlauf nochmals über eine Route mit niedriger Priorität gesendet werden, erreicht der Wert des HC-Feldes das Maximum und die Nachricht wird dann verworfen.

## Patentansprüche

1. Verfahren zur Lebenszeitbegrenzung von Datagrammen in paketvermittelten Netzen, bei denen die Datagramme jeweils ein ihre Lebensdauer angebendes Hop-Count-Datenfeld (HC-Datenfeld) enthalten, und bei dem Router, die das Datagramm bei seinem Weg durch das Netz durchläuft, dieses HC-Datenfeld vor dem Weiterleiten verändern können,
**dadurch gekennzeichnet,**
daß das HC-Datenfeld beim Durchlaufen eines Transferknotens nur bei Vorliegen weiterer Bedingungen verändert wird.

2. Verfahren nach Anspruch 1,
**dadurch gekennzeichnet,**
daß das HC-Datenfeld in Abhängigkeit von der Priorität des vom Transferknoten gewählten Weges verändert wird.

3. Verfahren nach Anspruch 1 oder 2,
**dadurch gekennzeichnet,**
daß das HC-Datenfeld in Abhängigkeit von Eigenschaften des Transferknotens, insbesondere seiner Position im Netz, verändert wird.

4. Verfahren nach einem der Ansprüche 1 bis 3,
**dadurch gekennzeichnet,**
daß das HC-Datenfeld von dem den Ursprung der Nachricht darstellenden Knoten auf Null gesetzt wird, und daß das HC-Datenfeld bei Veränderung erhöht wird.

5. Anwendung des Verfahrens nach einem der Ansprüche 1 bis 4 in nach dem Zeichengabesystem Nr. 7 ausgebildeten paketvermittelnden Netzen.

6. Vorrichtung zur Lebenszeitbegrenzung von Datagrammen in paketvermittelten Netzen, bei denen die Datagramme jeweils ein ihre Lebensdauer angebendes Hop-Count-Datenfeld (HC-Datenfeld) enthalten, und bei dem Router, die das Datagramm bei seinem Weg durch das Netz durchläuft, dieses HC-Datenfeld vor dem Weiterleiten verändern können,
**gekennzeichnet durch**
Mittel zum Verändern des HC-Datenfeldes beim Durchlaufen eines Transferknotens in Abhängigkeit von weiteren Bedingungen.

7. Vorrichtung nach Anspruch 6,
**gekennzeichnet durch**
Mittel zum Verändern des HC-Datenfeldes in Abhängigkeit von der Priorität des vom Transferknoten gewählten Weges.

8. Vorrichtung nach Anspruch 6 oder 7,
**gekennzeichnet durch**
Mittel zum Verändern des HC-Datenfeldes in Abhängigkeit von Eigenschaften des Transferknotens, insbesondere seiner Position im Netz.

9. Vorrichtung nach einem der Ansprüche 6 bis 8,
**gekennzeichnet durch**
Mittel zum Setzen des Wertes des HC-Datenfeldes auf Null.

10. Vorrichtung nach Anspruch 8,
**dadurch gekennzeichnet,**
daß die Mittel zum Verändern des HC-Datenfeldes dessen Wert bei Veränderung erhöhen.
